# EUROPEAN PATENT SPECIFICATION

(11) **EP 3 904 735 B1**
(45) Date of publication and mention of the grant of the patent: **27.11.2024**
(21) Application number: 19906481.7
(22) Date of filing: 24.12.2019
(51) Int. Cl.: F16K 5/04, F16K 5/06, F16K 25/00

(54) **FLOW CONTROL VALVE SEAL AND FLOW CONTROL VALVE DEVICE**
DURCHFLUSSREGELVENTILDICHTUNG UND DURCHFLUSSREGELVENTILVORRICHTUNG
JOINT D'ÉTANCHÉITÉ DE VANNE DE COMMANDE D'ÉCOULEMENT ET DISPOSITIF DE VANNE DE COMMANDE D'ÉCOULEMENT

(30) Priority: 25.12.2018 JP 2018241736; 23.12.2019 JP 2019231496
(43) Date of publication of application: 03.11.2021
(73) Proprietor: NTN Corporation, Osaka-shi, Osaka 550-0003 (JP)
(72) Inventor: YASUDA, Ken, Inabe-gun, Mie 511-0243 (JP); ISHII, Takuya, Inabe-gun, Mie 511-0243 (JP)
(74) Representative: Marks & Clerk LLP
(86) International application number: PCT/JP2019/050591
(87) International publication number: WO 2020/138073

(56) References cited:
- EP-A1- 2 892 957
- EP-A1- 3 290 758
- EP-A1- 3 339 386
- WO-A1-2016/009749
- WO-A1-2018/115490
- WO-A1-2018/190234
- DE-U1- 202015 100 400
- JP-A- 2001 501 235
- JP-A- 2005 233 395
- JP-A- 2017 133 616
- JP-A- 2018 179 122
- JP-A- H10 158 456
- JP-A- S63 118 357
- JP-B1- S 386 934
- JP-B1- S 469 391
- JP-U- S5 444 422
- JP-U- S58 167 367

## Description

### TECHNICAL FIELD

The present invention relates to a flow control valve seal installed in a flow control valve device that adjusts a flow rate and a flow passage of cooling water from an internal combustion engine in order to achieve low fuel consumption by enhancing heat efficiency of a vehicle, and a flow control valve device having the flow control valve seal.

### BACKGROUND ART

Conventionally, a circulation flow passage for cooling an engine by circulating cooling water has been disposed in a vehicle. The circulation flow passage is provided with, for example, a plurality of flow passages such as a flow passage that circulates the cooling water in a radiator, and a flow passage that circulates the cooling water in a heat core of an air conditioner. A flow control valve device that controls a flow rate of the cooling water is disposed in the circulation flow passage, and the flow rate or the like of the cooling water in each flow passage is adjusted by the flow control valve device.

As the flow control valve device, for example, Patent Document 1 discloses a flow control valve device provided with: a housing that includes an introduction port that receives the cooling water from an internal combustion engine and a discharge part that protrudes to discharge the cooling water; a rotor that includes a wall part having a spherical outer surface, and that rotates around a rotational axis that extends perpendicularly relative to the introduction port; and a ring-like seal that is disposed in the discharge part and slidably contacts with the outer surface of the rotor. Patent Document 1 discloses that a thermoplastic resin such as a polytetrafluoroethylene (PTFE) resin can be used as a material of the ring-like seal.

### PRIOR ART DOCUMENT

### PATENT DOCUMENT

Patent Document 1: JP 2016-188693 A

JP-A-2017-133616 discloses a valve device, a seal member is closely kept into contact with an outer surface of a valve element and an inner wall surface of a valve chest at peripheral edges of openings of one side and the other side of a third passage, the outer peripheral edge of the opening of one side is disposed on a rotation locus of an opening of a first passage and closely kept into contact with the outer surface of the valve element while receiving rotary slide contact of the valve element, the peripheral edge of the opening of the other side is closely kept into contact with the inner wall surface of the valve chest while surrounding an opening of a second passage, and a diameter of the third passage is maximum at the opening of the other side. Thus a diameter of the inner wall surface forming the third passage of the seal member becomes maximum at an end of the other side, and the seal member is configured to easily draw out the mold to the other side in the axial direction.

DE-A-202015100400 discloses a sealing arrangement for a valve, comprising at least one main body which comprises at least one first material and is elastically deformable at least in some areas, and at least one main body on a valve element of the valve on the side facing the main body and at least partially comprising a second material, characterized by at least one at least partially integrated into the main body embedded reinforcement body comprising at least one third material.

WO-A-2018190234 discloses a contact surface at the front end of a seal member, the contact surface being in sliding contact with the outer peripheral wall of the circular cylinder section of a rotor, is formed as a circular arc-shaped curved surface conforming to the shape of the outer peripheral wall of the circular cylinder section. Further, ridges are formed at at least the front end or the rear end of the circular arc-shaped curved surface when viewed in the rotational direction of the rotor, the ridges being formed by non-contact sections which are not in contact with the outer peripheral wall of the circular cylinder section. An urging member for pressing the contact surface of the seal member against the outer peripheral wall of the circular cylinder section is disposed on the opposite side of the contact surface of the seal member. This configuration enables the contact surface at the front end of the seal member and the outer peripheral wall of the rotor to be in appropriate sliding contact with each other.

### SUMMERY OF THE INVENTION

### PROBLEMS TO BE SOLVED BY THE INVENTION

In recent years, a low fuel consumption regulation for vehicles has become severe, and therefore installation onto vehicles, of a flow control valve device that adjusts a flow rate and a flow passage of cooling water from an internal combustion engine in order to achieve low fuel consumption by enhancing heat efficiency of a vehicle, has been promoted. In a ring-like seal used in the flow control valve device, a PTFE resin is used as described in Patent Document 1, however there is room for improving the durability and the cost of the seal. Further, a PTFE resin is high in melt viscosity and the injection molding cannot be adopted thereto. Consequently, it is necessary to apply machining to a molded body formed by means of compression molding or extrusion molding, and therefore the cost of the ring-like seal having a complex shape might be increased. Also, it has been required to improve the sealing performance for the cooling water and to reduce the friction resistance with the rotor served as a mating material.

An object of the present invention is, in order to solve such problems, to provide a flow control valve seal that is manufactured at a low cost, that makes wear damage of a rotor with which the flow control valve seal slidably contacts less, and that is superior in its low leak performance, low friction performance, and low wear performance, and also to provide a flow control valve device having the flow control valve seal.

### MEANS FOR SOLVING THE PROBLEMS

The invention provides a flow control valve seal as claimed in claim 1. Further aspects are described in the dependent claims including a flow control valve device with the seal of the invention and a use of the flow control valve device.

### EFFECT OF THE INVENTION

The flow control valve seal of the present invention is an injection molded body of a resin composition having a PFA resin, a FEP resin or an ETFE resin as a base resin, and thereby the seal having a complex shape can be formed only by injection molding at a low cost. Further, each of the PFA resin, the FEP resin, and the ETFE resin has low elasticity and low rigidity, and therefore the resin is easily deformed along the outer peripheral surface of a curved shape (spherical shape or cylindrical shape) of the resin rotor and the sealing therebetween is easily performed. Further, each of the PFA resin, the FEP resin, and the ETFE resin is superior in alkali resistance and low water absorption performance, and therefore the degradation of the resin can be suppressed under the environment of contacting with the cooling water. Consequently, the seal is manufactured at a low cost, the wear damage of the rotor with which the seal slidably contacts is less, and superior low leak performance, low friction performance, and low wear performance can be obtained.

The resin composition contains a non-fibrous filler and does not contain a fibrous filler, and thereby the wear damage is hardly on the resin rotor served as a mating material and a low friction and low wear property can be obtained.

The flow control valve seal includes the circumferential projection that is continuously formed along the whole circumference of the seal, on a ring-like sealing surface that slidably contacts with the rotor, and thereby a stable contact surface can be secured and a contact area between the rotor and the seal can be made small. Consequently, the friction force can be reduced.

In the flow control valve device of the present invention, the flow control valve seal is an injection molded body of a resin composition having the PFA resin, the ETFE resin, or the FEP resin as a base resin, and the rotor is an injection molded body of a resin composition having the PPS resin as a base resin. Accordingly, the seal and the rotor are slid to each other on the different resin materials. Thus, a wear increase due to a high friction coefficient that might be worried in the sliding between the same resin materials can be prevented and a low friction and low wear property can be obtained.

### BRIEF DESCRIPTION OF THE DRAWINGS

Fig. 1 is a cross-sectional view of a main part of a flow control valve device of the present invention, when a valve is opened.
Fig. 2 illustrates one example of a flow control valve seal of the present invention.
Fig. 3 illustrates another example of the flow control valve seal of the present invention.
Figs. 4(a) and 4(b) illustrate a shape of a projection of the flow control valve seal of the present invention.

### MODE FOR CARRYING OUT THE INVENTION

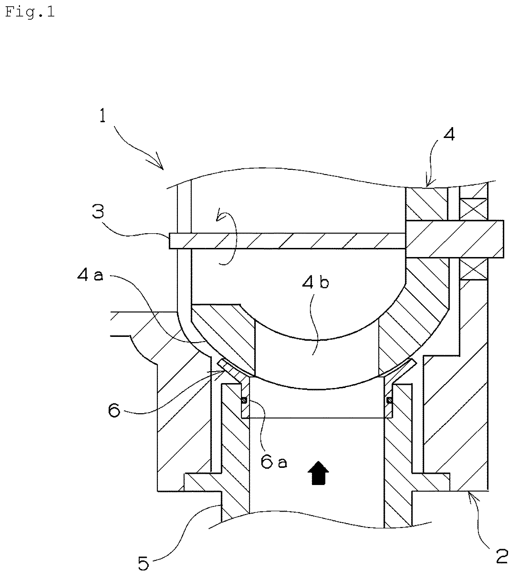

One example of a valve device to which a flow control valve seal of the present invention is applied, will be described with reference to Fig. 1. As shown in Fig. 1, a valve device 1 is provided with a housing 2, a rotational shaft 3 that is supported rotatably relative to the housing 2, a rotor 4 that is housed in the housing 2 and rotated integrally with the rotational shaft 3, and a seal 6 that slidably contacts with an outer peripheral surface 4a of the rotor 4. In the housing 2, an introduction part 5 that receives cooling water from an engine, and a discharge part (not shown) that discharges the cooling water to respective devices such as a radiator are disposed. A fix seal such as an O-ring is disposed between the introduction part 5 or the discharge part and the seal 6. Fig. 1 is a cross-sectional view of a main part at a side of the introduction part in the valve device 1. The rotational shaft 3 is connected to a motor (not shown).

The rotor 4 is a spherical rotational rotor having a hollow part therein. The outer peripheral surface 4a of the rotor 4 that slidably contacts with the seal 6 is formed in a convex spherical shape. The rotor 4 has a rotor opening 4b that penetrates the rotor 4 from an inside to an outside thereof. The seal 6 has a seal opening that penetrates the seal 6 at a center part thereof. When the rotational shaft 3 is rotated in a direction of an arrow, the rotor 4 is rotated in association with the rotation of the rotational shaft 3. When the rotor opening 4b and the seal opening are communicated to each other by the rotation of the rotor 4, the valve is turned into an opened state. While, the communication between the rotor opening 4b and the seal opening is cancelled by the rotation of the rotor 4, the valve is turned into a closed state. In the opened state shown in Fig. 1, the cooling water that flows in a direction of a black arrow is introduced into the rotor 4. In this way, opening and closing of the valve of the valve device 1 are controlled by rotationally operating the rotor 4, and thereby the flow rate and the distribution of the cooling water are adjusted.

The rotor is formed of resin and is an injection molded body of a resin composition having a thermoplastic resin as a base resin. The thermoplastic resin is not especially limited, but a thermoplastic resin other than fluororesin is preferably used as the thermoplastic resin. For example, a PPS resin, a polyamide (PA) 66 resin, a modified PA resin, a polyether ether ketone (PEEK) resin or the like may be adopted. Of these resins, the PPS resin is preferable because of its superior low water absorption performance, heat resistance, and alkali resistance, and low cost.

It is preferable that glass fiber is compounded into the resin composition used for the rotor 4 in order to obtain high strength, high elasticity, and high dimensional accuracy. The PPS resin into which the glass fiber is compounded is more preferable because of its superior high strength and high elasticity. In a case in which the glass fiber is compounded, the compound amount thereof is 10-50 mass%, preferably 20-40 mass% to the whole resin composition. In a case in which the glass fiber is more than the predetermined amount, the wear damage is caused on the seal. In a case in which the glass fiber is less than the predetermined amount, enough strength is not obtained. Additives such as an inorganic material may be compounded into the resin composition in order to eliminate anisotropy and to improve the dimensional accuracy.

The seal 6 is disposed between the rotor 4 and the cylindrical introduction part 5 in the housing 2. Specifically, a cylindrical part 6a of the seal 6 is fitted in and fixed to a cylindrical end part at a side of the rotor 4 of the introduction part 5. The seal 6 is pressed against the rotor 4 and thereby deformed along a shape of the outer peripheral surface 4a of the rotor. With this adherence state, the leakage of the cooling water is prevented.

Fig. 1 shows the configuration at a side of the introduction part, however a configuration at a side of the discharge part is basically the same. Specifically, a seal is disposed between the rotor 4 and the cylindrical discharge part (not shown) in the housing 2. The seal is pressed against the rotor 4 to adhere to the outer peripheral surface 4a. The seal is formed in the same shape as the seal 6 and formed of the same material as the seal 6 in Fig. 1. The discharge part is disposed at a position in the housing 2, far away from the introduction part 5 by a predetermined distance in a circumferential direction of the rotor 4 to be rotated (for example, a position opposite to the introduction part 5 in Fig. 1.).

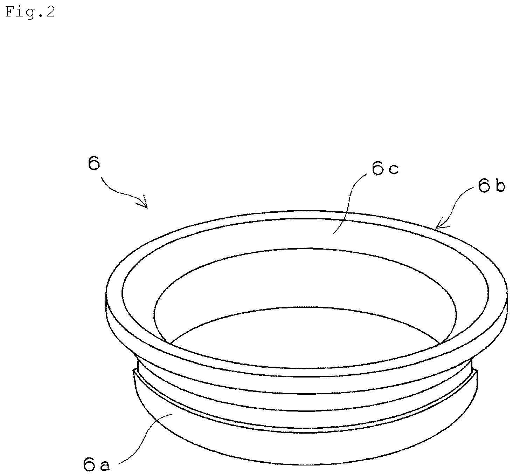

The seal 6 served as a flow control valve seal of the present invention will be described with reference to Fig. 2. As shown in Fig. 2, the seal 6 is a ring-like member having an opening that penetrates the seal 6 at a center axis portion thereof. The seal 6 has the cylindrical part 6a to be fixed to the introduction part, at one side in an axial direction, and a lip part 6b at the other side in the axial direction. The lip part 6b has a structure in which a cylindrical body is expanded to an outer diametrical side such that an inner diameter size is increased. An inner peripheral surface of the lip part 6b is served as a sealing surface 6c that slidably contacts with the outer peripheral surface 4a of the rotor 4. The sealing surface 6c has a structure of a concave spherical shape that easily adheres to the spherical rotor 4. However, the sealing surface 6c may be formed in a flat surface. In Fig. 2, the sealing surface 6c is a smooth surface without a projection (protrusion) and a recess. A groove to which an O-ring is attached is formed on an outer periphery of the cylindrical part 6a of the seal 6 so as to seal between the introduction part 5 or the discharge part and the seal 6.

When the valve device 1 is operated to be opened or closed, the rotor 4 is rotated in a state in which the seal 6 is pressed against the rotor 4. The seal 6 is fixed, and therefore the sealing surface 6c always slidably contacts with the outer peripheral surface 4a of the rotor 4. Consequently, the wear of the seal 6 is liable to progress compared to the outer peripheral surface 4a of the rotor. Also, it is necessary that the seal 6 adheres to the curved shape of the rotor, and therefore an appropriate deformability is required to the seal 6. Further, an aqueous solution of PH 7-11 containing ethylene glycol as a main component (antifreeze solution) is generally used as the cooling water, and therefore the alkali resistance and the low water absorption performance are also required to the seal 6 that contacts with the cooling water.

The flow control valve seal of the present invention is an injection molded body of a resin composition having injection-moldable fluororesin as a base resin. The fluororesin is at least one resin selected from among a PFA resin, a FEP resin, and an ETFE resin. As the base resin, each of the PFA resin, the FEP resin, and the ETFE resin may be used independently, or alternatively a combination of two or more of them may be used. Since each of the PFA resin, the FEP resin, and the ETFE resin has low elasticity and low rigidity, the seal is easily deformed along the outer peripheral surface of the curved shape (spherical or cylindrical shape) of the resin rotor, and therefore the sealing performance can be improved. Further, since each of the PFA resin, the FEP resin, and the ETFE resin is superior in the alkali resistance and the low water absorption performance, the degradation of the resin can be suppressed under the environment of contacting with the cooling water.

In a case in which the resin rotor and the seal that slidably contacts with the resin rotor are formed of the same resin material, the friction coefficient is high, and therefore the wear of the rotor and the wear of the seal might be large. However, since the rotor is formed of non-fluororesin and the seal is formed of fluororesin selected from among the PFA resin, the FEP resin, and the ETFE resin, such a problem is not caused.

While, the PTFE resin generally adopted as the resin material for the flow control valve seal is large in wear amount in an abrasive wear mode. For example, in a case in which the rotor is formed of the PPS resin into which the glass fiber is compounded, the outer peripheral surface of the rotor is gradually worn due to the sliding contact with the seal, and thereby it is considered that the glass fiber is exposed on the surface of the rotor. Since the sliding contact with the rotor of which the glass fiber is exposed on the surface causes the abrasive wear mode, in a case in which the PTFE resin is used as the base resin of the seal, the wear might be much. Against this, the seal that adopts the PFA resin, the FEP resin, or the ETFE resin is superior in wear resistance against the abrasion wear compared to the PTFE resin. Further, the seal can be formed by means of injection molding, and thereby the complex shape can be manufactured at a low cost.

In order to facilitate the injection molding, it is preferable that the melt flow rate (MFR) of each of the PFA resin and the FEP resin is 10-50 g/10 minutes at a temperature of 372°C and a load of 5 kg. Further, it is preferable that the MFR of the ETFE resin is 10-50 g/10 minutes at a temperature of 297°C and a load of 5 kg. In a case in which the MFR is less than 10 g/10 minutes, a melting flowability is inferior, and therefore accuracy of the sealing surface is not obtained due to the insufficient filling in the injection molding. Further, in a case in which the MFR is more than 50 g/10 minutes, the molecular weight is less, and therefore the wear resistance is insufficient.

Also in the resin composition containing a filler, in a case in which the MFR is less than 10 g/10 minutes, a melting flowability is inferior, and therefore accuracy of the sealing surface is not obtained due to the insufficient filling in the injection molding. The upper limit of the MFR of the resin composition into which the filler is compounded is not especially limited, however it is preferable that the upper limit is equal to or less than 50 g/10 minutes in a viewpoint of the wear resistance.

As the base resin, the fluororesin of any one of the PFA resin, the FEP resin, and the ETFE resin can be adopted. Since the resin is liable to match along the outer peripheral surface of the rotor as the elastic modulus of the resin becomes lower and thereby the favorable sealing performance is obtained, it is preferable to adopt the PFA resin that has the bending elastic modulus (based on ASTM D790) of 1 GPa or less and is superior in its long-term heat resistance, friction property, and chemical resistance. Further, in order to decrease the elastic modulus of the resin composition, elastomer may be compounded into the PFA resin, the FEP resin, or the ETFE resin. Fluororubber is preferable as the elastomer. A kind of the fluororubber is not limited, and therefore a vinylidene fluoride fluororubber (FKM), a tetrafluoroethylene-propylene fluororubber (FEPM), or a tetrafluoroethylene-perfluorovinylether fluororubber (FFKM) may be adopted. FKM of bipolymer or terpolymer may be adopted.

In order to improve the friction wear property of the resin composition in the cooling water, it is preferable to compound a filler having a resistance against an alkali aqueous solution of PH 7-11, into the resin composition. Examples of the filler include carbon fiber, graphite, PTFE resin, inorganic material (mica, talc, calcium carbonate, or the like), and whisker (calcium carbonate, potassium titanate, or the like). Of these fillers, a non-fibrous filler is preferable, and in this case, the filler that does not contain a fibrous filler is more preferable. An effect of the non-fibrous filler that increases the elastic modulus of each resin (PFA resin, FEP resin, or ETFE resin) is smaller than the effect of the fibrous filler. Accordingly, the seal 6 can be deformed along the outer peripheral surface 4a of the rotor 4 while improving the friction wear property, and thereby the favorable sealing performance can be obtained. Further, there is also an advantage that the rotor 4 to be served as a mating material is hardly damaged.

The non-fibrous filler may be a filler other than the fibrous filler having an aspect ratio such as carbon fiber, glass fiber, and whisker. Examples of the non-fibrous filler include amorphous fillers such as a granular filler, a spherical filler, a scaly filler, and a plate-like filler. Of these fillers, the granular filler and the spherical filler having an isotropic property are preferable.

As the non-fibrous filler, it is preferable to adopt the graphite or the PTFE resin. The graphite derives an effect of low friction and low wear property in the cooling water. The scaly, granular, or spherical graphite may be adopted. It is more preferable to adopt the granular graphite or the spherical graphite that does not increase the elastic modulus of each of the PFA resin, the FEP resin, and the ETFE resin. The PTFE resin derives low friction coefficient in a boundary lubrication state in which the cooling water is not interposed between the sealing surfaces. An average particle diameter of the PTFE resin is not especially limited, however the average particle diameter is preferably set to 10-50 µm. The average particle diameter is measured by, for example, a particle diameter distribution measurement device using a laser scattering method. The seal formed of the resin composition in which the graphite or the PTFE resin is compounded into the base resin described above, hardly causes the wear damage on the resin rotor, and the sealing performance that is stable in a long term can be obtained. Further, since the seal is superior in the alkali resistance, the seal can be used in a long term without degradation.

A well-known resin additive may be compounded into the resin composition to such an extent that does not deteriorate an advantage of the present invention. Examples of the additive include a friction property improving agent such as boron nitride, molybdenum disulfide, and tungsten disulfide, and a coloring agent such as carbon powder, iron oxide, and titanium oxide.

The resin composition used in the seal of the present invention contains 70-100 vol% of the base resin described above to the whole resin composition. In a case in which the filler is compounded into the resin composition, it is preferable that the resin composition contains 3-30 vol% of the filler and the residual part of the base resin, and it is more preferable that the resin composition contains 5-20 vol% of the filler and the residual part of the base resin. As the filler, it is preferable to adopt the graphite or the PTFE resin, which is a non-fibrous filler, and it is more preferable to adopt a combination of the graphite and the PTFE resin.

The flow control valve seal of the present invention can be manufactured at a low cost by the injection molding using the resin composition described above. A gate type in the injection molding may adopt a one gate type in which one gate is disposed at an inner diametrical side or an outer diametrical side of the seal, or a multiple gates type in which a plurality of gates is disposed. In order to improve the accuracy of the sealing surface, it is preferable to adopt the multiple gates type in which three or more gates are disposed. Also, a disc gate type can be adopted to further improve the accuracy of the sealing surface. A gate mark caused by using the disc gate type can be removed by means of gate cutting in the mold, or machining after molding. It is the most preferable that the disc gate is disposed at the inner diametrical side of the seal because the gate mark can be machined and removed easily while chucking the outer diametrical side of the seal by a lathe. In order to further improve the sealing performance by improving the accuracy of the sealing surface, only the sealing surface may be finished by means of machining or the like after the injection molding is performed.

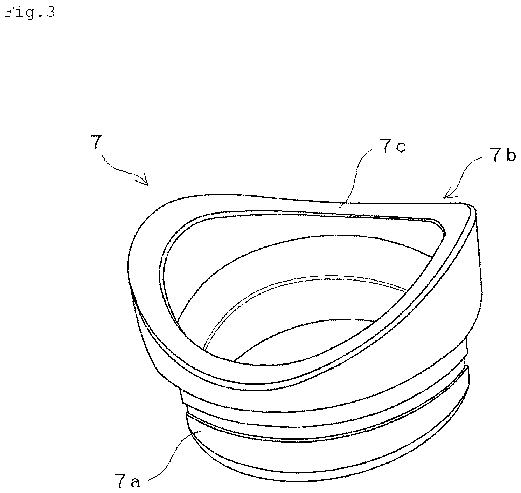

Fig. 3 shows another example of the flow control valve seal of the present invention. As shown in Fig. 3, a seal 7 is a ring-like member having an opening that penetrates the seal 7 at a center axis portion thereof. The seal 7 has a cylindrical part 7a to be fixed to the introduction part, at one side in an axial direction, and a lip part 7b at the other side in the axial direction. Here, the seal 6 shown in Fig. 2 is formed to slidably contact with the spherical rotor, while the seal 7 shown in Fig. 3 is formed to slidably contact with a cylindrical rotor. Thus, in order to adhere to a convex cylindrical curved surface of the rotor, a sealing surface 7c is formed in a concave cylindrical curved surface that is matched with the cylindrical curved surface of the rotor. In other words, the sealing surface 7c is formed in a corrugated shape along the axial direction.

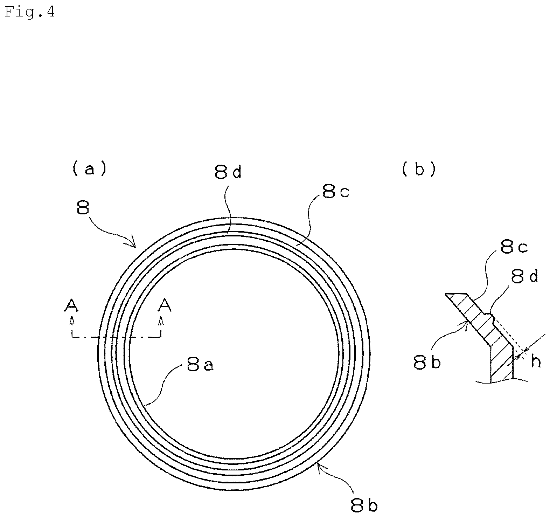

Figs. 4(a) and 4(b) show the other example of the flow control valve seal of the present invention. Fig. 4(a) is a plane view of the seal seen from a side of a lip part. Fig. 4 (b) is a cross-sectional view of a part of the seal taken along line A-A. In a seal 8 shown in Fig. 4, a circumferential projection 8d is disposed on a ring-like sealing surface 8c. The circumferential projection 8d is continuously formed on the whole circumference of the seal at a center in a width direction of the sealing surface 8c. As shown in Fig. 4(b), the circumferential projection 8d is formed in a convex shape on the sealing surface 8c. The convex shape is a round shape. A section of the circumferential projection 8d is an arc shape. The arc of the circumferential projection 8d has an angle of 180 degrees or less, preferably set to the arc angle that the circumferential projection 8d can be extracted from a mold in the injection molding without forcible extraction. It is preferable that the circumferential projection 8d is not protruded from a distal end surface of the lip part orthogonal to the axial direction of the seal 8.

The seal of the present invention is an injection molded body, and therefore fine (micro-level) unevenness is caused on the sealing surface formed by the injection molding. In a case in which the sealing is performed by the whole sealing surface, the unevenness on the sealing surface is lessened due to the sliding contact with the rotor and thereby the contact surface is made uniform. Consequently, the leakage amount is reduced. However, it is considered that making the contact surface uniform takes much time. Thus, the continuous circumferential projection is formed on the sealing surface so as to limit the sealing portion in the projection. Consequently, the accuracy of the sealing surface in the injection molding is easily improved, the sealing surface can be secured by deforming a tip of the projection due to a load, the contact surface is made uniform earlier in the sliding contact, and thereby the low leak performance can be obtained. Also, the contact area with the rotor is reduced, and thereby the friction force due to the sliding contact can be reduced. Further, by forming the convex shape in a round shape, the contact area with the rotor is further reduced. Consequently, the friction force can be further reduced, and the sealing performance is made stable because the whole circumference of the seal easily contacts with the rotor.

In the configuration shown in Figs. 4(a) and 4(b), one circumferential projection is disposed on the sealing surface, however it is not limited to this, and therefore a plurality of the circumferential projections may be disposed on the sealing surface. Considering the accuracy of the sealing surface in the injection molding, and the friction force and the sealing performance of the sealing surface, it is preferable to dispose two circumferential projections. In this configuration, a first circumferential projection may be disposed continuously on the whole circumference at an inner diametrical side of the sealing surface, and a second circumferential projection, which is concentric to the first circumferential projection, may be disposed at the outer diametrical side of the sealing surface. A height of the first circumferential projection and a height of the second circumferential projection may be the same or different to each other. Further, a circumferential projection may be disposed on the sealing surface of the seal for the cylindrical rotor shown in Fig. 3.

### EXAMPLES

Hereinafter, the present invention will be further specifically described with reference to examples. However, the present invention is not limited to the following examples. Table 2 and Table 4 show a configuration of the resin composition of each of Examples and Comparative examples, and the result of a wear test thereof.

### Examples 1 to 3 and Comparative examples 1 to 4

The bending test specimens and the wear test specimens (ring specimen) were formed by the injection molding using the resin composition compounded by the compound rate (vol%) shown in Table 2. In Comparative example 1 using the PTFE resin, each specimen was formed by compression forming.

A test based on ASTM D790 was performed on each of the obtained bending test specimens, and the bending elastic modulus (unit: GPa) thereof at 23°C was measured.

Further, a wear test was performed on each of the obtained wear test specimens in a test condition shown in Table 1 using a ring on disk tester, and the wear amount of each of the ring specimen and the mating material was measured. LLC in Table 1 denotes an engine cooling water containing ethylene glycol as a main component.
Ring specimen: φ17 (inner diameter) × φ21 (outer diameter) × 10 (width) mm
Mating material: φ33 (outer diameter) × 6 (width) mm, Turning, surface roughness Ra 1 µm

**Table 1**

| Test condition | |
|---|---|
| Circumferential speed | 1.5 m/min |
| Surface pressure | 0.3 MPa |
| Lubrication | LLC (density 50%) |
| Temperature | Room temperature |
| Mating material | PPS resin with glass fiber 40 wt% |
| Time | 50 hours |

**Table 2**

| | Example 1 | Example 2 | Example 3 | Compara tive example 1 | Compara tive example 2 | Compara tive example 3 | Compara tive example 4 |
|---|---|---|---|---|---|---|---|
| Resin composition | PFA: 100 vol% | FEP: 100 vol% | ETFE: 100 vol% | PTFE: 100 vol% | PPS: 100 vol% | PA66: 100 vol% | PEEK: 100 vol% |
| Available/unav ailable of injection molding | Availab le | Availab le | Availab le | Unavail able | Availab le | Availab le | Availab le |
| Bending elastic modulus (GPa) ¹⁾ | 0.67 | 0.65 | 1.4 | 0.55 | 3.8 | 2.9 | 3.8 |
| Wear amount of specimen (µm) | 24 | - | 17 | 34 | 29 | - | - |
| Wear amount of mating material (µm) | < 1 | - | < 1 | < 1 | 3 | - | - |

### 1) Test method: ASTM D790

As shown in Table 2, the resin compositions of Examples 1 to 3 having a base resin of the PFA resin, the FEP resin, and the ETFE resin, respectively, are injection-moldable and are low in the bending elastic modulus compared to Comparative examples 2 to 4. In particular, in Examples 1 and 2 using the PFA resin and the FEP resin, each bending elastic modulus is 1 GPa or less, and therefore each resin composition is easily deformed along the curved surface of the rotor. While, although the PTFE resin (Comparative example 1) is low elasticity of which the bending elastic modulus is low, the PTFE resin is not injection-moldable. In the wear test, the wear of itself and the wear of the mating material of each of Example 1 (PFA resin) and Example 3 (ETFE resin) are small compared to each of Comparative example 1 (PTFE resin) and Comparative example 2 (PPS resin). In a case in which the PPS resin is used, the wear of the mating material is also caused.

### Examples 4 to 9 and Comparative example 5

The fillers used in Examples 4 to 9 and Comparative example 5 are collectively described below. Each of average particle diameters of GRP-1 to GRP-3, and PTFE-1 is a 50% particle diameter measured by a particle diameter distribution measurement device using a laser scattering method.
(1) Graphite (GRP-1)
   Nippon Graphite Industries, Co.,Ltd.: CGB-20 (average particle diameter: 20 µm)
(2) Graphite (GRP-2)
   Nippon Graphite Industries, Co.,Ltd.: CGB-50 (average particle diameter: 50 µm)
(3) Graphite (GRP-3)
   Imerys Graphite & Carbon Japan Ltd. : TIMREX KS-25 (average particle diameter: 10 µm)
(4) PTFE resin powder (PTFE-1)
   Average particle diameter: 20 µm
(5) Carbon fiber (CF-1)
   Kureha Corporation: M-107T (fiber diameter 18 µm, average fiber length 0.4 mm)

The wear test specimens (ring specimen) were formed by the injection molding using the resin composition compounded by the compound rate (vol%) shown in Table 4. In Comparative example 5 using the PTFE resin, the specimen was formed by the compression forming.

A wear test was performed on each of the obtained wear test specimens in a test condition shown in Table 3 using a ring on disk tester. The wear amount of the ring specimen was measured and further presence/absence of the damage of the mating material after the test was visibly checked. LLC in Table 3 denotes an engine cooling water containing ethylene glycol as a main component.
Ring specimen: φ17 (inner diameter) × φ21 (outer diameter) × 10 (width) mm
Mating material: φ33 (outer diameter) × 6 (width) mm, Turning, surface roughness Ra 3 µm

**Table 3**

| Test condition | |
|---|---|
| Circumferential speed | 4.6 m/min |
| Surface pressure | 0.24 MPa |
| Lubrication | LLC (density 50%) |
| Temperature | 80°C |
| Mating material | PPS resin with glass fiber 40 wt% |
| Time | 50 hours |

**Table 4**

| | | | Example 4 | Example 5 | Example 6 | Example 7 | Example 8 | Example 9 | Comparative example 5 |
|---|---|---|---|---|---|---|---|---|---|
| Resin composition (vol%) | | | | | | | | | |
| | Base resin | | | | | | | | |
| | | PFA resin | 85 | 85 | 85 | - | 85 | - | - |
| | | ETFE resin | - | - | - | - | - | - | 90 |
| | | PTFE resin | - | - | - | - | - | - | - |
| | Filter | | - | - | - | - | - | - | - |
| | | GPR-1 | 10 | - | - | - | - | - | - |
| | | GPR-2 | - | 10 | - | 20 | - | 20 | - |
| | | GPR-3 | - | - | 10 | - | - | - | 10 |
| | | PTFE-1 | 5 | 5 | 5 | - | 5 | - | - |
| | | CF-1 | - | - | - | - | 10 | - | - |
| Available/unaval lable of injection molding | | | Availabale | Availabale | Availabale | Availabale | Availabale | Availabale | Availabale |
| Wear amount of specimen (µm) | | | 17 | 18 | 22 | 11 | 30 | 15 | 40 |
| Presence/absence of damage of mating material | | | None | None | None | None | Damaged | None | None |

As shown in Table 4, the resin compositions of Examples 4 to 8 having a base resin of the PFA resin and Examples 9 having a base resin of the ETFE resin are injection-moldable, and the ware amount of the specimens are 11-30 µm. The wear amount of each of Examples 4 to 7 in which the graphite is compounded is small compared to Example 8 in which the carbon fiber is compounded. Further, in Example 8, the mating material is damaged.

In the resin composition of Comparative example 5, the graphite is compounded into the PTFE resin as the base resin. The wear amount of the specimen of Comparative example 5 is 40 µm, which is inferior to the wear resistance of each of Examples 4 to 9.

### INDUSTRIAL APPLICABILITY

The flow control valve seal of the present invention can be manufactured at a low cost, and makes the wear damage of the rotor with which the flow control valve seal slidably contacts less, and is superior in its low leak performance, low friction performance, and low wear performance. Consequently, the flow control valve seal can be widely used in the flow control valve device that controls the flow rate of the cooling water.

### REFERENCE SIGNS LIST

- 1:: valve device
- 2:: housing
- 3:: rotational shaft
- 4:: rotor
- 5:: introduction part
- 6:: seal
- 7:: seal
- 8:: seal

## Claims

1. A flow control valve seal (6; 7; 8) for installing in a flow control valve device (1), the flow control valve device comprising a housing (2) having an introduction part (5) for receiving a cooling water from an internal combustion engine and a discharge part for discharging the cooling water, and a resin rotor (4) disposed in the housing (2) and having an outer peripheral surface formed in a spherical or cylindrical shape, the rotor (4) being rotated relative to the housing (2), wherein, the flow control valve seal is configure to be disposed between the introduction part or the discharge part and the rotor (4) in the housing (2);
wherein the flow control valve seal (6; 7; 8) is formed in a ring-like shape that is configured to slidably contact the outer peripheral surface of the rotor (4);
wherein an aqueous solution of PH 7-11 containing ethylene glycol as a main component is used as the cooling water;
the flow control valve seal (6; 7; 8) is an injection molded body of a resin composition having injection-moldable fluororesin as a base resin;
the resin composition contains a non-fibrous filler and does not contain a fibrous filler; and
the fluororesin is at least one resin selected from among a tetrafluoroethylene-perfluoro alkylvinyl ether copolymer resin, a tetrafluoroethylene-hexafluoropropylene copolymer resin, and a tetrafluoroethylene-ethylene copolymer resin.

2. The flow control valve seal according to claim 1, wherein the non-fibrous filler is graphite or PTFE resin, and
the resin composition contains 3-30 vol% of the non-fibrous filler to the whole of the resin composition and the residual part of the fluororesin.

3. The flow control valve seal according to claim 1, further comprising a circumferential projection that is continuously formed along the whole circumference of the seal, on a ring-like sealing surface that slidably contacts with the rotor.

4. A flow control valve device (1) comprising:
a housing (2) having an introduction part (5) for receiving a cooling water from an internal combustion engine and a discharge part for discharging the cooling water;
a resin rotor (4) disposed in the housing (2) and having an outer peripheral surface formed in a spherical or cylindrical shape, the rotor (4) being rotatable relative to the housing (2); and
a flow control valve seal (6; 7; 8) disposed between the introduction part (5) or the discharge part and the rotor (4)in the housing (2), the flow control valve seal (6; 7; 8) being in accordance with any one of claims 1 to 3.

5. The use of a flow control valve device according to claim 4 does in a system using an aqueous solution of PH 7-11 containing ethylene glycol as a main component as cooling water.

## Patentansprüche

1. Durchflussregelventildichtung (6; 7; 8) zum Installieren in einer Durchflussregelventilvorrichtung (1), wobei die Durchflussregelventilvorrichtung ein Gehäuse (2), das einen Einleitungsteil (5) zum Aufnehmen eines Kühlwassers von einer Verbrennungskraftmaschine und einen Abgabeteil zum Abgeben des Kühlwassers aufweist, und einen Harzrotor (4), der in dem Gehäuse (2) angeordnet ist und eine äußere Umfangsfläche aufweist, die in einer sphärischen oder zylindrischen Gestalt geformt ist, umfasst, wobei der Rotor (4) im Verhältnis zu dem Gehäuse (2) gedreht wird, wobei die Durchflussregelventildichtung dafür konfiguriert ist, zwischen dem Einleitungsteil oder dem Abgabeteil und dem Rotor (4) in dem Gehäuse (2) angeordnet zu werden;
wobei die Durchflussregelventildichtung (6; 7; 8) in einer ringartigen Gestalt geformt ist, die dafür konfiguriert ist, verschiebbar die äußere Umfangsfläche des Rotors (4) zu berühren;
wobei eine wässrige Lösung mit einem pH-Wert von 7 bis 11, die Ethylenglycol als eine Hauptkomponente enthält, als das Kühlwasser verwendet wird;
die Durchflussregelventildichtung (6; 7; 8) ein spritzgegossener Körper aus einer Harzzusammensetzung ist, die spritzgießbares Fluorharz als ein Basisharz aufweist;
die Harzzusammensetzung einen nicht-faserigen Füllstoff enthält und keinen faserigen Füllstoff enthält; und
das Fluorharz mindestens ein Harz, ausgewählt unter einem Tetrafluorethylen-Perfluoralkylvinylether-Copolymerharz, einem Tetrafluorethylen-Hexafluorpropylen-Copolymerharz und einem Tetrafluorethylen-Ethylen-Copolymerharz, ist.

2. Durchflussregelventildichtung nach Anspruch 1, wobei der nicht-faserige Füllstoff Graphit oder PTFE-Harz ist, und
die Harzzusammensetzung 3 bis 30 Vol.-% des nicht-faserigen Füllstoffs zur Gesamtheit der Harzzusammensetzung und den Restanteil des Fluorharzes enthält.

3. Durchflussregelventildichtung nach Anspruch 1, die ferner einen umlaufenden Vorsprung, der durchgehend entlang des gesamten Umfangs der Dichtung geformt ist, auf einer ringartigen Dichtungsfläche, die verschiebbar den Rotor berührt, umfasst.

4. Durchflussregelventilvorrichtung (1), die Folgendes umfasst:
ein Gehäuse (2), das einen Einleitungsteil (5) zum Aufnehmen eines Kühlwassers von einer Verbrennungskraftmaschine und einen Abgabeteil zum Abgeben des Kühlwassers aufweist;
einen Harzrotor (4), der in dem Gehäuse (2) angeordnet ist und eine äußere Umfangsfläche aufweist, die in einer sphärischen oder zylindrischen Gestalt geformt ist, wobei der Rotor (4) im Verhältnis zu dem Gehäuse (2) drehbar ist; und
eine Durchflussregelventildichtung (6; 7; 8), die zwischen dem Einleitungsteil (5) oder dem Abgabeteil und dem Rotor (4) in dem Gehäuse (2) angeordnet ist, wobei die Durchflussregelventildichtung (6; 7; 8) nach einem der Ansprüche 1 bis 3 ist.

5. Verwendung einer Durchflussregelventilvorrichtung nach Anspruch 4 in einem System, das eine wässrige Lösung mit einem pH-Wert von 7 bis 11, die Ethylenglycol als eine Hauptkomponente enthält, als Kühlwasser verwendet.

## Revendications

1. Joint d'étanchéité de vanne de régulation de débit (6 ; 7 ; 8) destiné à être installé dans un dispositif de vanne de régulation de débit (1), le dispositif de vanne de régulation de débit comprenant un carter (2) comportant une partie d'introduction (5) pour recevoir une eau de refroidissement en provenance d'un moteur à combustion interne et une partie de décharge pour décharger l'eau de refroidissement, et un rotor en résine (4) disposé dans le carter (2) et comportant une surface périphérique externe formée en forme sphérique ou cylindrique, le rotor (4) étant mis en rotation par rapport au carter (2), dans lequel le joint d'étanchéité de vanne de régulation de débit est configuré pour être disposé entre la partie d'introduction ou la partie de décharge et le rotor (4) dans le carter (2) ;
dans lequel le joint d'étanchéité de vanne de régulation de débit (6 ; 7 ; 8) est formé en forme ressemblant à un anneau qui est configurée pour entrer en contact par glissement avec la surface périphérique externe du rotor (4) ;
dans lequel une solution aqueuse de pH 7-11 contenant de l'éthylène glycol en tant que composant principal est utilisée comme eau de refroidissement ;
le joint d'étanchéité de vanne de régulation de débit (6 ; 7 ; 8) est un corps moulé par injection en une composition de résine comportant de la fluororésine moulable par injection en tant que résine de base ;
la composition de résine contient un agent de remplissage non fibreux et ne contient aucun agent de remplissage fibreux ; et
la fluororésine est au moins une résine choisie parmi une résine copolymère tétrafluoroéthylène-perfluoroalkylvinyle, une résine copolymère tétrafluoroéthylène-hexafluoropropylène et une résine copolymère tétrafluoroéthylène-éthylène.

2. Joint d'étanchéité de vanne de régulation de débit selon la revendication 1, dans lequel l'agent de remplissage non fibreux est du graphite ou une résine PTFE, et
la composition de résine contient de 3 à 30 % en volume de l'agent de remplissage non fibreux par rapport au total de la composition de résine et la partie résiduelle de la fluororésine.

3. Joint d'étanchéité de vanne de régulation de débit selon la revendication 1, comprenant en outre une saillie circonférentielle qui est formée en continu le long de la totalité de la circonférence du joint d'étanchéité, sur une surface d'étanchéité en forme ressemblant à un anneau qui entre en contact par glissement avec le rotor.

4. Dispositif de vanne de régulation de débit (1) comprenant :
un carter (2) comportant une partie d'introduction (5) pour recevoir une eau de refroidissement en provenance d'un moteur à combustion interne et une partie de décharge pour décharger l'eau de refroidissement ;
un rotor en résine (4) disposé dans le carter (2) et comportant une surface périphérique externe formée en forme sphérique ou cylindrique, le rotor (4) pouvant être mis en rotation par rapport au carter (2) ; et
un joint d'étanchéité de vanne de régulation de débit (6 ; 7 ; 8) disposé entre la partie d'introduction (5) ou la partie de décharge et le rotor (4) dans le carter (2), le joint d'étanchéité de vanne de régulation de débit (6 ; 7 ; 8) étant selon l'une quelconque des revendications 1 à 3.

5. Utilisation d'un dispositif de vanne de régulation de débit selon la revendication 4 dans un système qui utilise une solution aqueuse de pH 7-11 contenant de l'éthylène glycol en tant que composant principal comme eau de refroidissement.
